# EUROPEAN PATENT SPECIFICATION

(11) **EP 3 056 974 B1**
(45) Date of publication and mention of the grant of the patent: **10.04.2019**
(21) Application number: 16155106.4
(22) Date of filing: 10.02.2016
(51) Int. Cl.: G06F 3/0346, G06F 3/0481, G06F 3/0484

(54) **DISPLAY APPARATUS AND METHOD**
ANZEIGEVORRICHTUNG UND VERFAHREN
APPAREIL ET PROCEDE D'AFFICHAGE

(30) Priority: 11.02.2015 KR 20150020968
(43) Date of publication of application: 17.08.2016
(73) Proprietor: Samsung Electronics Co., Ltd., Gyeonggi-do 16677 (KR)
(72) Inventor: LEE, Jung-hwan, Gyeonggi-do (KR)
(74) Representative: Taor, Simon Edward William

(56) References cited:
- EP-A2- 2 613 546
- EP-A2- 2 752 732
- US-A- 5 687 331

## Description

The present disclosure relates to a display apparatus and a display method, and more particularly, to a display apparatus and a display method of providing an item region.

Display apparatuses are apparatuses each having a function of displaying an image visible to a user. The user views broadcasting through the display apparatus. The display apparatus displays the broadcasting signal selected by the user among broadcasting signals transmitted from a broadcasting station on a display. Currently, a global trend in the broadcasting is a conversion from analog broadcasting to digital broadcasting.

Digital broadcasting means broadcasting for transmitting a digital image and an audio signal. Digital broadcasting has a feature in which data loss is small because digital broadcasting is resistant to external noise, has an advantage in error correction, has a high resolution, and provides a clear picture, compared with the analog broadcasting. Also, digital broadcasting provides a bidirectional service unlike the analog broadcasting.

Further, recently, smart televisions (TVs) which provide various contents in addition to a digital broadcasting function have been provided. The smart TV does not aim to manually perform an operation depending on a selection of the user, but aims to analyze and provide operations suited to a user without manipulation by the user.

Moreover, recently, the smart TVs in which an interaction with the user is improved and items are implemented in order to provide much information to the user have been provided.

EP2613546 discloses a communicator which transmits a mode change command to a display apparatus. The mode change command is a user command which is generated in conjunction with an execution of an operation method corresponding to a display mode which is different from a current display mode.

It is an aspect to provide a display apparatus and a display method capable of providing a natural and seamless user interface feedback to a user.

Additional aspects will be set forth in part in the description which follows and, in part, will be apparent from the description, or may be learned by practice of the presented exemplary embodiments.

According to an aspect of the present invention, a display apparatus is provided according to claim 1. According to another aspect of the present invention, a display method in a display apparatus is provided according to claim 11.

Advantageous embodiments are defined in the dependent claims.

Embodiments of the invention can provide a display system comprising a display apparatus according to any of the embodiments described herein, a first control device for implementing the pointing mode and a second control device for implementing the navigation mode. The first and second control devices may be implemented on the same control device.

The above and/or other aspects will become apparent and more readily appreciated from the following description of various exemplary embodiments, taken in conjunction with the accompanying drawings in which:
FIG. 1A is a diagram illustrating a display apparatus capable of being controlled using various control devices according to an exemplary embodiment;
FIG. 1B is a reference diagram illustrating a display apparatus operating in a focusing mode according to an exemplary embodiment;
FIG. 1C is a reference diagram illustrating a display apparatus operating in a pointing mode according to an exemplary embodiment;
FIG. 2 is a block diagram illustrating a display apparatus according to an exemplary embodiment;
FIG. 3A is a diagram illustrating a detailed configuration of the display apparatus of FIG. 2, according to the exemplary embodiment;
FIG. 3B is a block diagram illustrating an example of a module stored in a storage according to an exemplary embodiment;
FIGS. 4A and 4B are block diagrams illustrating a configuration of a control device according to various exemplary embodiments;
FIG. 5 is a flowchart for describing a display method in a display apparatus according to an exemplary embodiment;
FIG. 6 is a reference diagram for describing a display screen when a display apparatus is operated in a pointing mode according to an exemplary embodiment;
FIG. 7 is a reference diagram for describing an operation of a display apparatus according to input of a control device to enable a display apparatus to leave a pointing mode according to an exemplary embodiment;
FIG. 8 is a reference diagram for describing a display screen when a display apparatus is operated in a pointing mode according to an exemplary embodiment;
FIG. 9 is a flowchart for describing a display method in a display apparatus according to an exemplary embodiment;
FIG. 10 is a reference diagram for describing input of a control device to enable a display apparatus to leave a focusing mode according to an exemplary embodiment; and
FIG. 11 is a reference diagram for describing an operation of a display apparatus according to input of a control device to enable a display apparatus to leave a focusing mode according to an exemplary embodiment.

Exemplary embodiments will be described in detail with reference to the accompanying drawings. Further, a method of configuring and using an electronic device according to exemplary embodiments will be described in detail with reference to examples which are illustrated in the accompanying drawings. Like reference numerals refer to like elements or components that substantially perform the same function throughout.

It will be understood that, although the terms including an ordinal number such as "first", "second" may be used herein in reference to elements of the exemplary embodiments, such elements should not be construed as limited by these terms. For example, a "first" element could be termed a "second" element, and a "second" element could be termed a "first" element, without departing from the scope of the present disclosure. Herein, the term "and/or" includes any and all combinations of one or more referents.

A selection of a key located in a control device may be used as a term which denotes a push of the key, a touch of the key, or a drag of the key.

Contents may include a video, an image, a text, or a Web document.

A portion in which contents are substantially output on a display may be referred to as a screen or display.

The terminology used herein to describe exemplary embodiments is not intended to be limiting. The use of the singular form in this specification should not preclude the presence of more than one referent, unless the context clearly indicates otherwise. It will be further understood that the terms "comprises", "comprising", "includes", and/or "including", when used herein, specify the presence of stated features, items, steps, operations, elements, and/or components, but do not preclude the presence or addition of one or more other features, items, steps, operations, elements, components, and/or groups thereof.

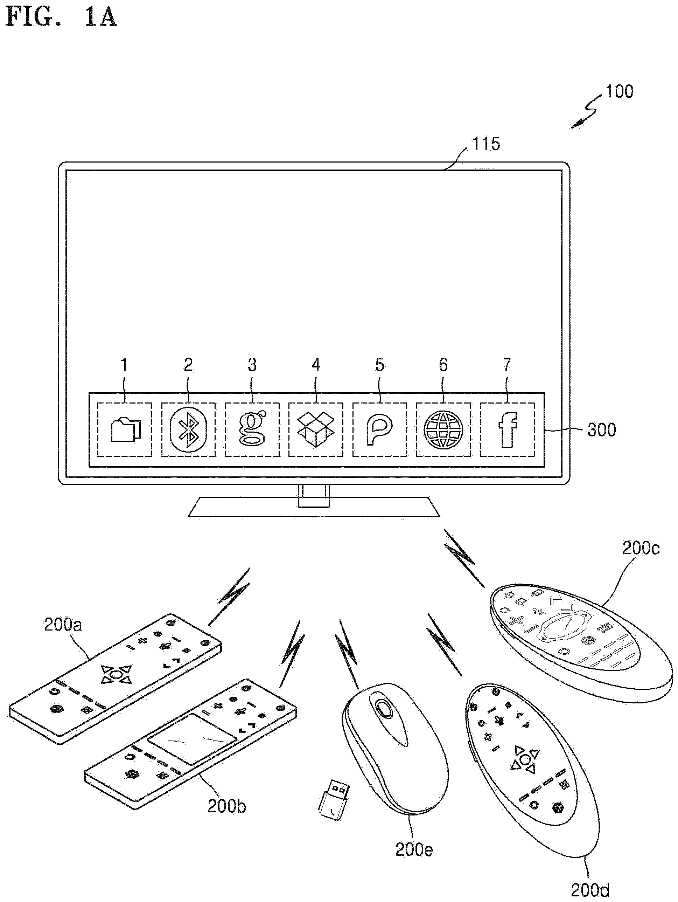

FIG. 1A is a diagram illustrating a display apparatus capable of being controlled using various control devices according to an exemplary embodiment.

Referring to FIG. 1A, a display apparatus 100 capable of communicating with control devices 200a, 200b, 200c, 200d, and 200e through wired or wireless communication is illustrated. It should be noted that various control devices 200a, 200b, 200c, 200d, and 200e may be referred to as control device 200 when describing operation and/or features that are common to the control devices 200a, 200b, 200c, 200d, and 200e.

The control device 200 may control the display apparatus 100 using a near field communication (NFC) including an infrared ray or Bluetooth. A function of the display apparatus 100 may be controlled by a user using at least one of a key (including a button), a touch pad, a microphone (not shown) capable of receiving a voice of the user, and a motion sensor (not shown) capable of recognizing a motion of the control device 200, which are included in the control devices 200a, 200b, 200c, 200d, and 200e. It should be noted that, in some exemplary embodiments, an individual control device 200a, 200b, 200c, 200d, or 200e may omit one or more of the key, touch pad, microphone, and/or motion sensor.

The control device 200 may include a power on/off button for turning on or off power of the display apparatus 100. The control device 200 may also change a channel, control volume, select one of terrestrial broadcasting/cable broadcasting/satellite broadcasting, and/or set environments by a user's input.

The term "user" used in this specification denotes a person who controls a function or an operation of the display apparatus 100 using the control device 200, and may include a viewer, a manager, or an installation engineer.

The display apparatus 100 may be implemented by not only a flat display device but also a curved display device having a screen with a curvature, or a flexible display device capable of controlling a curvature. For example, an output resolution of the display apparatus 100 may include high definition (HD), full HD, ultra HD, or a greater resolution than the ultra HD.

The display apparatus 100 may provide an item region 300 for displaying at least one item on a display 115 of the display apparatus 100. Items 1, 2, 3, 4, 5, 6, and 7 may be displayed in the item region 300. It should be noted that items 1, 2, 3, 4, 5, 6, and 7 are exemplary, and the number of items may be greater or fewer than 7.

An example in which the item region is arranged in a horizontal direction is illustrated in FIG. 1A, but the item region may be arranged in a vertical direction or in various forms.

One item region is illustrated in FIG. 1A, but two or more item regions may be provided. When two or more item regions are provided on the display, for example, each of the plurality of item regions may represent each of a plurality of categories.

The items may represent contents. The items which indicate the contents may include, for example, an item which indicates image contents such as a movie or a drama, an item which indicates audio contents such as music, an item which indicates an application, an item which indicates a broadcasting channel, and an item which indicates history information on contents executed by a user, etc.

The plurality of items may be displayed as images. For example, when the item is an item which indicates the contents related to the movie or the drama, the item may be displayed as an image of the movie or drama poster. Also, when the item is an item which indicates the audio contents such as the music, the item may be displayed as an image of a poster of an album in which the music is included. Further, when the item is an item which indicates the application, the item may be displayed as an image which indicates a corresponding application or a screen of an application which is executed last. Moreover, when the item is an item which indicates a broadcasting channel, the item may be displayed as an image of a screen viewed last by a user in a corresponding channel or an image which indicates a program which is currently on air in a corresponding channel. When the item is an item which indicates the history information on the contents executed by the user, the item may be displayed as an image of a screen which is executed last in a corresponding content.

Further, the items may refer to various settings of the display apparatus 100. For example, the setting may include an interface for connecting the display apparatus 100 and an external device, and/or the external device connected with the display apparatus 100. For example, the item which indicates the interface for connecting the external device may be an item which indicates a port of the display apparatus 100 to which the external device is connected. For example, the item which indicates the external device may include an item which indicates a high-definition multimedia interface (HDMI) port, an item which indicates a component jack, an item which indicates a personal computer (PC) port, and/or an item which indicates a Universal Serial Bus (USB) port, etc. Further, the item which indicates the external device may be an item which indicates the external device connected to the interface.

The display apparatus 100 according to an exemplary embodiment may control the items of the item region and/or their referents based on input from the control device 200a including a direction key. For example, in the case an item indicates an application, the display apparatus 100 may control the item displayed and/or may control the application itself based on the input from the control device 200a using the direction key.

The display apparatus 100 according to an exemplary embodiment may control the items of the item region and/or their referents based on input from the control device 200b including a touch pad. For example, in the case an item indicates an application, the display apparatus 100 may control the item displayed and/or may control the application itself based on the input from the control device 200b using the touch pad.

The display apparatus 100 according to an exemplary embodiment may control the items of the item region and/or their referents based on input from the control device 200d in the form of a mouse. For example, in the case an item indicates an application, the display apparatus 100 may control the item displayed and/or may control the application itself based on the input from the control device 200d in the form of the mouse, i.e. by receiving operations through the mouse.

The display apparatus 100 according to an exemplary embodiment may control the items of the item region and/or their referents based on input from the control device 200c which includes the direction key and the touch pad and is implemented as a pointing device. For example, in the case an item indicates an application, the display apparatus 100 may control the item displayed and/or may control the application itself based on the input from the control device 200c using the direction key and the touch pad.

As shown in FIG.iA, the display apparatus 100 may be controlled by a plurality of control devices 200a, 200b, 200c, 200d, 200e which are different from each other, and forms of objects displayed on the display apparatus 100 in response to an indication of an input from each control device may be different.

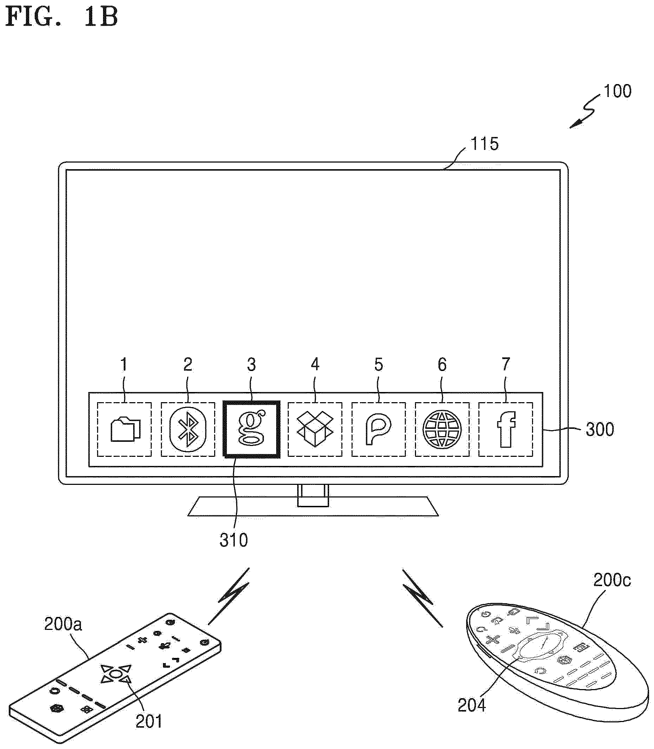

FIG. 1B is a reference diagram illustrating a display apparatus operating in a focusing mode according to an exemplary embodiment. A focusing mode may be referred to as a navigation mode or a menu driven mode.

Referring the FIG. 1B, the display apparatus 100 may select, move, or scroll the items displayed in the item region 300 based on receipt of an indication of the input of the direction key provided in the control device 200. The scrolling denotes an operation of vertically or horizontally sliding a text, an image, or a video displayed on a computer display, a monitor, or a display of a television. The scrolling may be an operation of moving a view of a user to show a portion of an image which is not displayed entirely without changing a layout of the text or the image.

According to an exemplary embodiment, when initially sensing input from the user using direction keys 201 or 204 provided respectively in the control device 200a and 200c, the display apparatus 100 may initialize an operation for controlling the item according to the input of the direction key, and display a specific item by adding, according to an algorithm, a visual effect, which indicates that the specific item that is focused on, to the specific item. For example, when initially receiving the indication of the input of the direction keys provided in the control device 200a or 200c, the display apparatus 100 may display a first item 3 by adding a focus visual effect 310 to the item 3 displayed in the item region. The algorithm - in this case the focus visual effect algorithm - may be predetermined. In some exemplary embodiments, the algorithm may be set by the manufacturer or the user.

According to an exemplary embodiment, the focus visual effect may include displaying a focused item by surrounding a border of the focused item with a bold line.

According to other exemplary embodiments, the focus visual effect may include using a different color for the focused item, or using different transparency for the focused item.

According to another exemplary embodiment, the focus visual effect may include using a different size for the focused item.

According to another exemplary embodiment, the focus visual effect may include generating an interval between the focused item and other items.

Hence, the focus visual effect may include various forms of highlighting or marking for section the item.

According to another exemplary embodiment, when sensing the input from the user using the direction key provided in the control device 200a or 200c in a state in which a specific item is focused, the display apparatus 100 may move the focus visual effect 310 to an adjacent item corresponding to the input of the direction key.

For example, when receiving an indication of the input of a right direction key from the control device 200a or 200c in a state in which the item 3 is focused, the display apparatus 100 may display the item 4 by moving the focus visual effect added to the item 3 to the item 4 adjacent in a right direction of the item 3. It will be understood that when the focus visual effect is moved and added to item 4, the focus visual effect added to item 3 is removed. However, in some exemplary embodiments, it may be possible to add the focus visual effect to item 4 while maintaining the focus visual effect on item 3, for example in a case of selecting two items to interact together.

For example, when receiving an indication of the input of a left direction key from the control devices 200a or 200c in the state in which the item 3 is focused, the display apparatus 100 may display the item 2 by moving the focus visual effect added to the item 3 to the item 2 adjacent in a left direction of the item 3. It will be understood that when the focus visual effect is moved and added to item 2, the focus visual effect added to item 3 is removed. However, in some exemplary embodiments, it may be possible to add the focus visual effect to item 2 while maintaining the focus visual effect on item 3, for example in a case of selecting two items to interact together

According to an exemplary embodiment, the display apparatus 100 may control the items in the item region based on the pointing input of the control device 200.

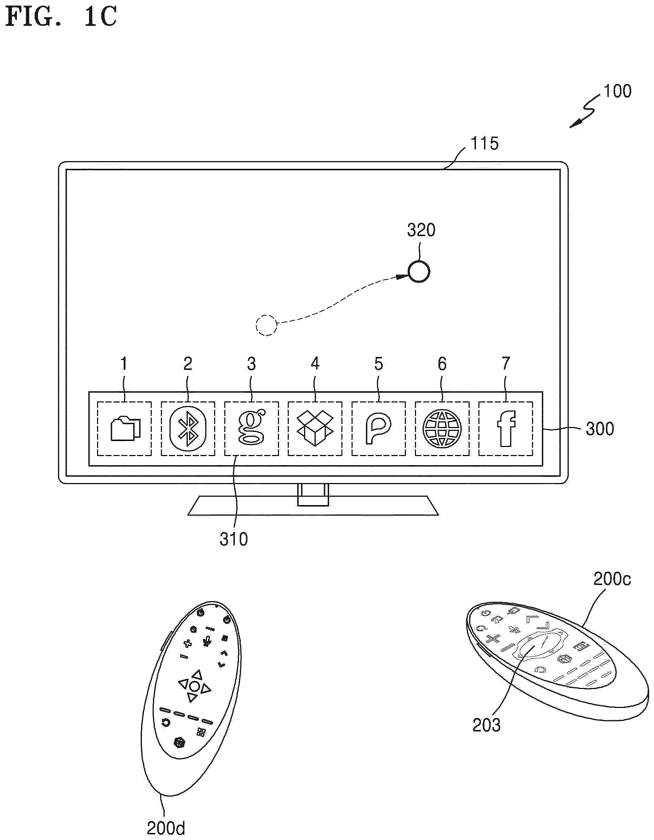

FIG. 1C is a reference diagram illustrating a display apparatus operating in a pointing mode according to an exemplary embodiment.

Referring to FIG. 1C, a cursor 320 may be displayed on a screen of the display 115 in response to the pointing position of the control device 200.

An example in which the cursor has a circular shape is illustrated in FIG. 1C, but the shape is not particularly limited in embodiments of the invention and the cursor may have various shapes. The cursor 320 refers to an indicator used for showing a position in a computer monitor or the display in response to input of a text or the pointing device in a computing device. The indicator used for showing the position on the display in response to receiving the input from the pointing device such as a mouse, etc. may be mainly referred to as a pointer. Referring to FIG. 1C, when the user moves the control device 200c to point toward the screen of the display 115, the display apparatus 100 may be initialized to operate in a pointing mode and the cursor 320 may be displayed on the screen of the display 115 in response to a position indicated by the control device 200c. For example, a motion sensor that may be provided in the control device 200c may sense the movement of the control device 200c by the user, and may transmit the motion to the display apparatus 100 and the display apparatus 100 may control the display to accordingly move the cursor 320 on the screen. Alternatively, in some exemplary embodiments, the user may move the cursor 320 using a touch pad of the control device 200.

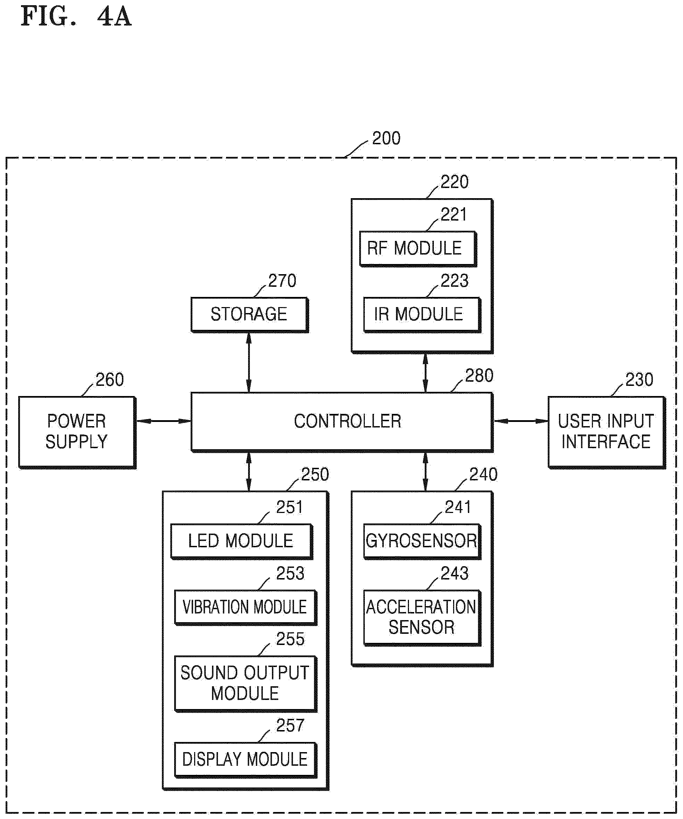

For example, when receiving a signal generated when a finger of the user has touched a touch pad 203 provided in the middle of the control device 200c implemented as the pointing device, the display apparatus 100 may be initialized to operate in a pointing mode, and display the cursor 320 on the display 115. When the user moves the control device 200c in a state in which the finger touches the touch pad 203, a motion sensor (an accelerator sensor, a gyro sensor) provided in the control device may sense a motion of the control device, and output a value of the motion sensor corresponding to the sensed motion, and a controller 280 (see, e.g., FIG. 4A) of the control device may control a communicator 220 to transmit the value of the motion sensor to the display apparatus 100. The display apparatus 100 may display the cursor 320 on the display 115 by determining a position of the cursor 320 based on the received value of the motion sensor. Further, for example, when pushing the touch pad 203 of the control device 200c using the finger in a manner of pushing a normal button, a switch provided below the touch pad may be operated and used as an input unit for selecting a specific item.

Further, when the control device 200c indicates one of the items in the item region 300, the display apparatus 100 may display a corresponding item in a rollover state. When the cursor 320 is located on the item, the display apparatus 100 may add a visual effect to a corresponding item in which the cursor is located similar to the focus visual effect, and when the cursor departs the item by being moved again, the display apparatus 100 may remove the focus visual effect in order to restore the item to its original display configuration.

Moreover, the control device 200d serving as the pointing function may be implemented without the touch pad. For example, the pointing device may be implemented so that the value of the motion sensor corresponding to the motion of the control device 200 is output only by an operation in which the user grips and moves the control device 200d.

As such, as shown in FIG. 1B, when using the display apparatus in the focusing mode, the display apparatus 100 may display by adding the focus visual effect or a highlight effect to a selected item in order to indicate the selected item, and when using the display apparatus in the pointing mode, the display apparatus displays the cursor on the screen of the display. Accordingly, a method capable of providing intuitive and natural experiences to the user, such as how to process the cursor displayed in the pointing mode when the user wants to use the display apparatus in the focusing mode while using the display apparatus in the pointing mode, or whether to place the cursor initially displayed in the pointing mode at any place when the user wants to use the display apparatus in the pointing mode while using the display apparatus in the focusing mode may be provided.

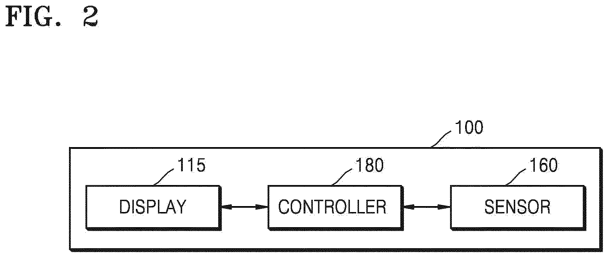

FIG. 2 is a block diagram illustrating a display apparatus 100 according to an exemplary embodiment.

Referring to FIG. 2, the display apparatus 100 may include a display 115, a controller 180, and a sensor 160.

The sensor 160 senses input from the control device 200.

The sensor 160 according to an exemplary embodiment may sense the input of the control device to enable the display apparatus 100 to leave the pointing mode.

The sensor 160 according to another exemplary embodiment may sense the input of the control device to enable the display apparatus 100 to leave the focusing mode.

The display 115 may output the cursor on the screen in response to an indication of the input of the control device 200 used in the pointing mode according to the control of the controller 180, and output the focus visual effect on the screen in response to the indication of the input of the control device 200 used in the focusing mode.

Further, the display 115 provides at least one item on the screen.

The display 115 according to an exemplary embodiment may move the cursor displayed on the display in the pointing mode onto the item which is focused on last in the focusing mode in response to the indication of the input of the control device to enable the display apparatus to leave the pointing mode according to the control of the controller 180.

Further, the display 115 according to another exemplary embodiment may display the cursor displayed on the display in the pointing mode on the item which is focused on last in response to the indication of the input of the control device to enable the display apparatus to leave the focusing mode according to the control of the controller 180.

The controller 180 may receive a signal corresponding to a pointing position of the control device 200 received through the sensor 160, and control the display 115 to display by determining a shape and a position of the cursor according to a signal corresponding to the pointing position.

The controller 180 may control the display 115 to display by moving the focus visual effect of the item in correspondence to a direction of the direction key in response to the indication of the input of the direction key of the control device 200 received through the sensor 160.

According to an exemplary embodiment, the controller 180 may control the display 115 so that the cursor displayed on the display in the pointing mode is moved onto the item which is focused on last in the focusing mode in response to the indication of the input of the control device to enable the display apparatus to leave the pointing mode.

According to another exemplary embodiment, the controller 180 may control the display 115 so that the cursor displayed on the display in the pointing mode is displayed on the item which is focused on last in response to the indication of the input of the control device to enable the display apparatus to leave the focusing mode.

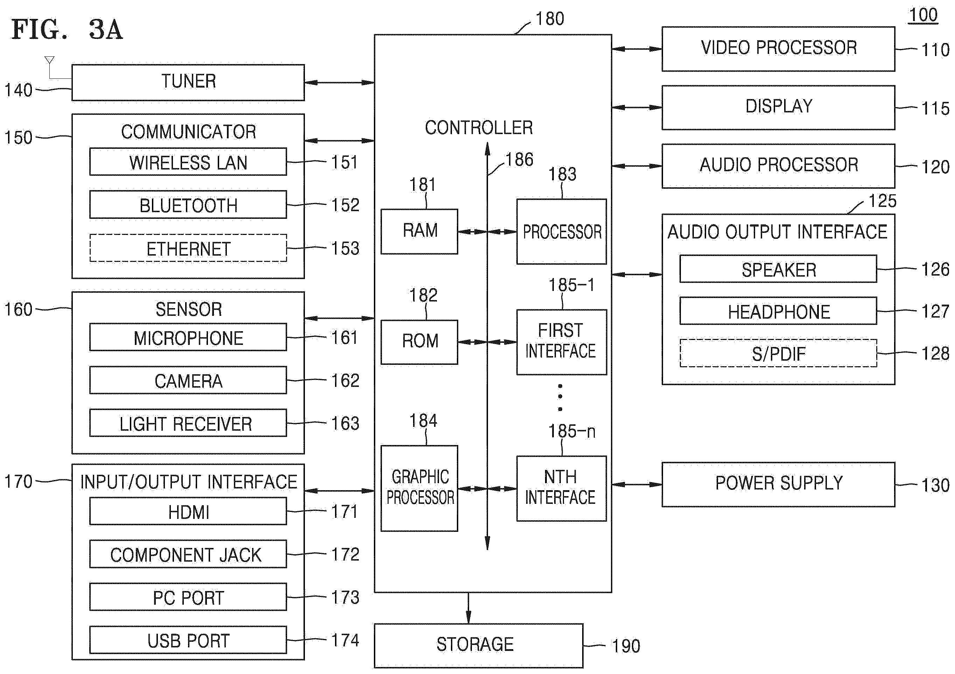

FIG. 3A is a diagram illustrating a detailed configuration of the display apparatus 100 according to the exemplary embodiment.

Referring to FIG. 3A, the display apparatus 100 may include a video processor 110, a display 115, an audio processor 120, an audio output interface 125, a power supply 130, a tuner 140, a communicator 150, a sensor 160, an input/output interface 170, a controller 180, and a storage 190.

The video processor 110 may process video data received by the display apparatus 100. The video processor 110 may perform various image processing operations such as decoding, scaling, noise filtering, frame rate conversion, resolution conversion, etc. on the video data.

The display 115 may display a video included in a broadcasting signal received through the tuner 140 by the control of the controller 180 on a screen. Further, the display 115 may display contents (for example, moving images) input through the communicator 150 or the input/output interface 170. The display 115 may output an image stored in the storage 190 by the control of the controller 180. Further, the display 115 may display a voice user interface (for example, including a voice command guide) for performing a voice recognition task corresponding to voice recognition, or a motion UI (for example, including a user motion guide for a motion recognition) for performing a motion recognition task corresponding to motion recognition.

The display 115 according to an exemplary embodiment may display the cursor on the screen in response to the input according to the pointing mode of the control device 200 by the control of the controller 180.

The display 115 according to another exemplary embodiment may display the focus visual effect on the item in response to the input according to the direction key mode of the control device 200 by the control of the controller 180.

The display 115 according to another exemplary embodiment may move the cursor displayed on the display in the pointing mode onto the item which is focused on last in the focusing mode in response to the indication of the input of at least one control device to enable the display apparatus to leave the pointing mode.

The display 115 according to another exemplary embodiment may cause the cursor to disappear after an operation of moving the cursor onto the item which is focused on last is completed.

The display 115 according to another exemplary embodiment may move the cursor onto the item which is focused on last, and also add the visual effect to the item which is focused on last.

The display 115 according to another exemplary embodiment may continuously display the movement of the cursor when moving the cursor to the item which is focused on last.

The display 115 according to another exemplary embodiment may display the cursor displayed in the pointing mode on the item which is focused on last in response to the indication of the input of the control device to enable the display apparatus to leave the focusing mode.

The audio processor 120 may process audio data. Various processing operations such as decoding, amplifying, noise filtering, etc. on the audio data may be performed in the audio processor 120. The audio processor 120 may include a plurality of audio processing modules to process the audio data corresponding to a plurality of contents.

The audio output interface 125 may output the audio included in the broadcasting signal received through the tuner 140 by the control of the controller 180. The audio output interface 125 may output the audio (for example, a voice, a sound) input through the communicator 150 or the input/output unit 170. Further, the audio output interface 125 may output the audio stored in the storage 190 by the control of the controller 180. The audio output interface 125 may include at least one of a speaker 126, a headphone output terminal (HEADPHONE) 127, and a Sony/Philips digital interface (S/PDIF) output terminal 128. The audio output interface 125 may include a combination of the speaker 126, the headphone output terminal 127, and the S/PDIF output terminal 128.

The power supply 130 may supply power input from an external power source to internal components 110 to 190 of the display apparatus 100 by the control of the controller 180. Further, the power supply 130 may supply the power output from one or more batteries (not shown) located inside the display apparatus 100 to the internal components 110 to 190 by the control of the controller 180.

The tuner 140 may tune and select only a frequency of a channel which is desired to be received in the display apparatus 100 by amplifying, mixing, resonating the broadcasting signal received through wired or wireless communication. The broadcasting signal may include an audio, a video, and addition information (for example, an electronic program guide (EPG)).

The tuner 140 may receive the broadcasting signal in a frequency band corresponding to a channel number (for example, a cable broadcasting number 506) according to a user input (for example, a channel number received from the control device 200, that is, a channel number input, a channel up and down input, and a channel input in an EPG screen).

The tuner 140 may receive the broadcasting signal from various sources such as terrestrial broadcasting, cable broadcasting, satellite broadcasting, Internet broadcasting, etc. The tuner 140 may also receive the broadcasting signal from a source such as analog broadcasting or digital broadcasting, etc. The broadcasting signal received through tuner 140 may be decoded (for example, audio decoding, video decoding, or additional information decoding) and be separated into the audio, the video, and/or the additional information. The separate audio, video, and/or additional information may be stored in the storage 190 by the control of the controller 180.

The tuner 140 of the display apparatus 100 may be one tuner or may comprise a plurality of tuners. According to an exemplary embodiment, when there are the plurality of the tuners, a plurality of broadcasting signals may be output to a plurality of windows configuring a multi window screen provided in the display 115.

The tuner 140 may be implemented in an all-in-one type with the display apparatus 100, or as a separate device having a tuner electrically connected with the display apparatus 100 (for example, a tuner (not shown) connected to a set-top box (not shown), a tuner connect to the input/output interface 170, etc.).

The communicator 150 may connect the display apparatus 100 to the external device (for example, an audio device, etc.) by the control of the controller 180. The controller may transmit/receive contents with the external device connected through the communicator 150, download an application from the external device, or perform Web browsing. The communicator 150 may include one of a wireless local area network (LAN) 151, Bluetooth 152, and a wired Ethernet 153 corresponding to the performance and a structure of the display apparatus 100. Alternatively, the communicator 150 may include a combination of the LAN 151, the Bluetooth 152, and the wired Ethernet 153. The communicator 150 may receive a control signal of the control device 200 by the control of the controller 180. The control signal may be implemented in a Bluetooth type, a radio frequency (RF) signal type, and/or a wireless-fidelity (Wi-Fi) type, etc.

The communicator 150 may further include another LAN communication scheme (for example, NFC (not shown), Bluetooth low energy (BLE) (not shown)) excluding the Bluetooth, etc. In other words, the type of communication is not particularly limited in embodiments of the invention.

The sensor 160 senses a voice of the user, an image of the user, and/or an interaction of the user, etc. The sensor 160 may include one or more of a microphone 161, a camera 162, and a light receiver 163, etc.

The microphone 161 may receive an utterance of the user. The microphone 161 may convert the received voice into an electrical signal, and output the electrical signal to the controller 180. For example, the voice of the user may include speech corresponding to a menu or a function of the display apparatus 100. A recognition range of the microphone 161 includes a distance of within about 4 m between the microphone 161 and a position of the user, and may be changed according to a volume of the voice of the user and a peripheral environment (for example, a speaker sound, peripheral noise).

The microphone 161 may be implemented in an all-in-one type or a separate type with the display apparatus 100. The separate microphone may be electrically connected with the display apparatus 100 through the communicator 150 or the input/output interface 170.

It may be understood that in some configurations the microphone 161 may be omitted according to the performance and the structure of the display apparatus 100.

The camera 162 may receive an image (for example, a continuous frame) corresponding to a motion of the user including a gesture in a recognition range of the camera. For example, the recognition range of the camera includes a distance of about 0.1 to about 5 m between the camera 162 and the user. For example, the motion of the user may include a motion of a portion of a user's body or a portion of the user such as a face, an expression, a hand, a fist, a finger of the user. The camera 162 may convert the received image into an electrical signal and output the electrical signal to the controller 180 according to the control of the controller 180.

The controller 180 may select a menu displayed on the display apparatus 100 or perform control corresponding to the motion recognition result using the received motion recognition result. For example, the control may include channel change, volume control, and indicator movement.

The camera 162 may include a lens (not shown) and an image sensor (not shown). The camera 162 may support an optical zoom or a digital zoom using a plurality of lenses and image processing. The recognition range of the camera 162 may be diversely set according to an angle of the camera and a peripheral environment condition. In some exemplary embodiments, the camera 162 may include a plurality of cameras 162. When there are a plurality of cameras, the camera 162 may receive a three-dimensional still image or a three-dimensional moving image using the plurality of cameras.

The camera 162 may be implemented in an all-in-one type or a separate type with the display apparatus 100. A separate device (not shown) including the separate camera 162 may be electrically connected with the display apparatus 100 through the communicator 150 or the input/output interface 170, etc.

It may be understood that in some exemplary embodiments the camera 162 may be omitted according to the performance and a structure of the display apparatus 100.

The light receiver 163 may receive an optical signal (including the control signal) received from the external control device 200 through an optical window (not shown) of a bezel of the display 115. The light receiver 163 may receive an optical signal corresponding to the input of the user (for example, a touch, a push, a touch gesture, a voice, or a motion) from the control device 200. The control signal may be extracted from the received optical signal by the control of the controller 180.

According to an exemplary embodiment, the light receiver 163 may receive a signal corresponding to a pointing position of the control device 200, and transmit the received signal to the controller 180. For example, the light receiver 163 may receive a signal corresponding to a movement of the control device 200 when the control device 200 is moved in a state in which a finger of the user touches the touch pad 203 provided in the control device 200, and transmit the received signal to the controller 180.

According to another exemplary embodiment, the light receiver 163 may receive a signal which indicates that a specific button provided in the control device 200 is pushed, and transmit the received signal to the controller 180. For example, the light receiver 163 may receive a signal which indicates that the touch pad 203 of the button type is pushed when the user pushes the touch pad 203 provided in the control device 200 in a button type using a finger, and transmit the received signal to the controller 180. For example, the signal indicating that the touch pad 203 of the button type is pushed may be used as a signal for selecting one among the items.

According to another exemplary embodiment, the light receiver 163 may receive a signal corresponding to the input of the direction key of the control device 200, and transmit the received signal to the controller 180. For example, the light receiver 163 may receive a signal indicating that the direction key button 204 is pushed when the user pushes the direction key button 204 provided in the control device 200, and transmit the received signal to the controller 180.

According to another exemplary embodiment, the light receiver 163 may receive a signal corresponding to the input of the control device 200 for allowing the display apparatus to depart the pointing mode.

The input of the control device to enable the display apparatus to leave the pointing mode may include a deactivation action of the control device used in the pointing mode and an activation action of the control device used in the focusing mode. The deactivation action of the control device used in the pointing mode may include a release of a touch in the control device used in the pointing mode or an entry of a power saving mode of the control device used in the pointing mode. The activation action of the control device used in the focusing mode may include the input of the direction key of the control device used in the focusing mode.

According to another exemplary embodiment, the light receiver 163 may receive a signal corresponding to the input of the control device 200 for allowing the display apparatus to depart the focusing mode.

The input of the control device to enable the display apparatus to leave the focusing mode may include the activation action of the pointing device.

The input/output interface 170 may receive video (for example, a moving image, etc.), audio (for example, a voice, music, etc.), and/or additional information (for example, an EPG, etc.) from the outside of the display apparatus 100 by the control of the controller 180. The input/output interface 170 may include one of a HDMI port 171, a component jack 172, a PC port 173, and a USB port 174, etc. Alternatively, the input/output interface 170 may include a combination of the HDMI port 171, the component jack 172, the PC port 173, and the USB port 174, etc. The configuration of the input/output interface 170 is not particularly limited in embodiments of the invention.

It may be understood that the input/output interface 170 may be diversely implemented according to various exemplary embodiment.

The controller 180 may control overall operations of the display apparatus 100 and a signal flow between the internal components 110 to 190 of the display apparatus 100, and perform a function of processing data. The controller 180 may execute an operating system (OS) and various applications stored in the storage 190 when a signal corresponding to the input of the user exists or when a condition which is previously stored is satisfied.

The controller 180 may include a random access memory (RAM) 181 which stores a signal or data input from the outside of the display apparatus 100 or is used as a storage area corresponding to various tasks performed in the display apparatus 100, a read only memory (ROM) 182 in which a control program for controlling the display apparatus 100 is stored, and a processor 183. The controller 180 may further includes a graphics processor (GPU) 184.

Alternatively, the processor 183 may include the graphic processor (GPU) for performing a graphic process corresponding to the video. The processor 183 may be implemented as a system-on-chip (SOC) into which a core (not shown) and the GPU are integrated. The processor 183 may include a single core, a dual core, a triple core, a quad core, and a core which is a multiple thereof.

Further, the processor 183 may include a plurality of processors. For example, the processor 183 may be implemented as a main processor (not shown), and a sub processor (not shown) operating in a sleep mode.

The GPU 184 may generate a screen including various objects such as an icon, an image, a text, etc. using a calculation unit (not shown) and a rendering unit (not shown). The calculation unit calculates an attribute value such as coordinate values, a shape, a size, a color, etc. in which each object is displayed according to a layout of the screen using the user interaction sensed through the sensor 160. The rendering unit generates the screen of various layouts including an object based on the attribute value calculated in the calculation unit. The screen generated in the rendering unit is displayed in the display region of the display 115.

According to an exemplary embodiment, the GPU 184 may generate the cursor displayed on the screen in response to an indication of the input of the control device 200 (i.e., a signal corresponding to the input of the control device 200), or generate a focus visual effect added to the item displayed on the screen according to the control of the controller 180.

According to another exemplary embodiment, the GPU 184 may generate a plurality of item regions and images of the items according to the control of the controller 180.

According to another exemplary embodiment, the GPU 184 may generate a first animation of moving the cursor displayed on the display in the pointing mode onto the item which is focused on last in the focusing mode according to the control of the controller 180.

According to another exemplary embodiment, the GPU 184 may generate a second animation of causing the cursor to disappear from the display after the operation of moving the cursor onto the item which is focused on last is completed.

According to another exemplary embodiment, the GPU 184 may move the cursor onto the item which is focused on last, and also generate a visual effect which is displayed on the item which is focused on last.

According to another exemplary embodiment, the GPU 184 may generate a third animation of displaying the cursor displayed in the pointing mode on the item which is focused on last.

First to nth interfaces 185-1 to 185-n may be connected with various components described above. One of the interfaces may be a network interface connected to the external device through a network.

The RAM 181, the ROM 182, the processor 183, the GPU 184, and the first to nth interfaces 185-1 to 185-n may be mutually connected through an internal bus 186.

In an exemplary embodiment, the term "controller of the display apparatus" denotes a controller including the processor 183, the ROM 182, and the RAM 181.

The controller 180 may receive pointing position information on the control device 200 through at least one of the light receiver 163 receiving light output from the control device 200, and a panel key (not shown) located at one of a side surface or a rear surface of the display apparatus.

According to an exemplary embodiment, the controller 180 may control the display 115 providing at least one item region in which each item region displays at least a portion of the items included in an item list including a plurality of items.

According to another exemplary embodiment, the controller 180 may control the display 115 to move the cursor displayed on the display in the pointing mode onto the item which is focused on last in the focusing mode in response to a signal corresponding to the input of the control device when the signal corresponding to the input of the control device for allowing the display apparatus to depart the pointing mode is sensed. For this, the controller 180 may control the display 115 to output the first animation generated by the GPU 184.

According to another exemplary embodiment, the controller 180 may control the display 115 to cause the cursor to disappear from the display after the operation of moving the cursor onto the item which is focused on last is completed. For this, the controller 180 may control the display 115 to output the second animation generated by the GPU 184.

According to another exemplary embodiment, the controller 180 may control the display 115 to move the cursor onto the item which is focused on last, and also add a visual effect to the item which is focused on last.

According to another exemplary embodiment, the controller 180 may control the display 115 to continuously display the movement of the cursor when moving the cursor to the item which is focused on last.

According to another exemplary embodiment, the controller 180 may control the display 115 to display the cursor displayed in the pointing mode on the item which is focused on last in response to a signal corresponding to the input of the control device to enable the display apparatus to leave the focusing mode. For this, the controller 180 may control the display 115 to output the third animation generated by the GPU 184.

It may be understood that a configuration and an operation of the controller 180 may be diversely implemented according to the various exemplary embodiments.

The storage 190 may store a variety of data, programs, or applications for driving and controlling the display apparatus 100 by the control of the controller 180. The storage 190 may store an input/output signal or data corresponding to the driving of the video processor 110, the display 115, the audio processor 120, the audio output interface 125, the power supply 130, the tuner 140, the communicator 150, the sensor 160, and/or the input/output interface 170. The storage 190 may store a control program for controlling the display apparatus 100 and the controller, an application which is first provided from a manufacturing company or downloaded from the outside, a graphic user interface (GUI) related to the application, an object (for example, an image, a text, an icon, a button, etc.) for providing the GUI, user information, documents, databases, or related data.

In an exemplary embodiment, the term "storage" denotes a storage including the storage 190, the ROM 182 and/or the RAM 181 of the controller, or a memory card (for example, a micro secure digital (SD) card, or a USB memory (not shown)) which is installed in the display apparatus 100. Further, the storage 190 may include a non-volatile memory, a volatile memory, a hard disk drive (HDD), and/or a solid state drive (SSD).

The storage 190 may include a broadcasting reception module, a channel control module, a volume control module, a communication control module, a voice recognition module, a motion recognition module, an optical reception module, a display control module, an audio control module, an external input control module, a power control module, a power control module of an external device connected by a wireless connection (for example, Bluetooth), a voice database (DB), or a motion DB, etc. which are not shown. The modules and the DBs of the storage 190 which are not shown may be implemented in a software form for performing a control function of broadcasting reception, a channel control function, a volume control function, a communication control function, a voice recognition function, a motion recognition function, an optical reception function, an audio control function, an external input control function, a power control function, a display control function controlling the display of a cursor or a scrolling item in the display apparatus 100. The controller 180 may perform each function using the software stored in the storage 190.

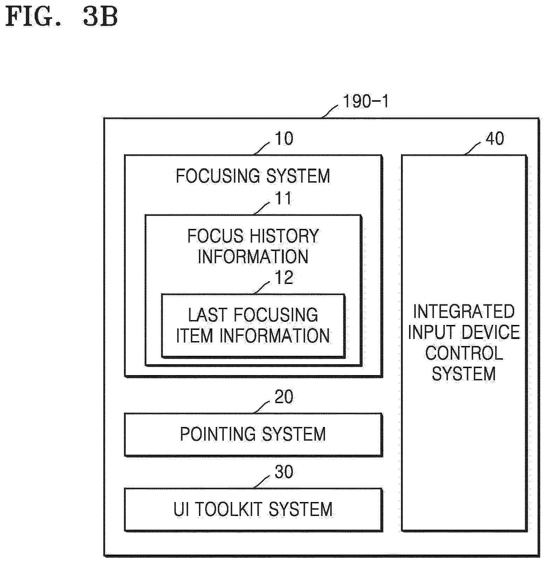

According to an exemplary embodiment, the storage 190 may include a display control module shown in FIG. 3B to implement the display control function. This will be described below.

According to another exemplary embodiment, the storage 190 may store an image corresponding to each item.

According to another exemplary embodiment, the storage 190 may store an image corresponding to a cursor output in response to the pointing position of the control device 200.

According to another exemplary embodiment, the storage 190 may store a graphic image for providing the focus visual effect added to the items in response to a signal corresponding to the input of the direction key of the control device 200.

The storage 190 may store a moving image or an image corresponding to a visual feedback.

The storage 190 may store a sound corresponding to an auditory feedback.

The storage 190 may include a presentation module. The presentation module may be a module for configuring a display screen, the presentation module may include a multimedia module for replaying and outputting multimedia contents, and a UI rendering module for performing user interfacing and graphic processing. The multimedia module may include a player module, a camcorder module, a sound processing module, etc. Accordingly, an operation of generating a screen and playing a sound may be performed by playing various kinds of multimedia contents. The UI rendering module may include an image compositor module composing images, a coordinate combination module generating by combining coordinates on the screen on which an image is displayed, an X11 module receiving various kinds of events from the hardware, a two-dimensional/three-dimensional (2D/3D) toolkit which provides a tool for configuring a UI of a 2D or 3D type.

Further, the display apparatus 100 having the display 115 may be electrically connected to a separate external device (for example, a set-top box (not shown)) having a tuner. For example, the display apparatus 100 may be implemented as an analog TV, a digital TV, a 3D TV, a smart TV, a light emitting diode (LED) TV, an organic light emitting diode (OLED) TV, a plasma TV, a monitor, etc., but it may be understood that the display apparatus 100 is not limited thereto in embodiments of the invention.

The display apparatus 100 may include a sensor (for example, an illumination sensor, a temperature sensor, etc. (not shown)) detecting a condition of the inside or the outside of the display apparatus 100.

At least one component may be added to or removed from the components (for example, 110 to 190) shown in the display apparatus 100 of FIG. 3A according to the performance of the display apparatus 100. Further, it may be understood that the locations of the components (for example, 110 to 190) may be changed according to the performance and the structure of the display apparatus 100.

FIG. 3B is a block diagram illustrating an example of a display control module stored in a storage according to an exemplary embodiment.

Referring to FIG. 3B, a display control module 190-1 may include a focusing system 10, a pointing system 20, a user interface (UI) toolkit system 30, and an integrated input device control system 40.

The focusing system 10 manages information on an object or an item focused on when the display apparatus is used in the focusing mode.

The focusing system 11 may include focus history information 11. The focus history information 11 may have history information on focusing, and last focusing item information 12 may have information on a UI object or an item which is currently focused on or was focused on last. The focusing system 10 may provide the last focusing item information when the display apparatus 100 is changed from the focusing mode into the pointing mode, or from the pointing mode to the focusing mode since the focusing system 10 maintains the last focusing item information 12. Further, the focusing system 10 may inform the integrated input device control system 40 of the activation action of the control device used in the focusing mode as an event.

The pointing system 20 manipulates a position and a motion of the cursor displayed on the display 115 in the pointing mode. Further, the pointing system 20 provides a function of informing the integrated input device control system 40 of a state generated from the input device as an event. For example, the pointing system 20 may inform the integrated input device control system 40 of the activation action or the deactivation action of the control device used in the pointing mode as an event.

The UI toolkit system 30 displays UI objects or items on the screen of the display 115, and provides information related to the UI objects or the items.

The integrated input device control system 40 serves to provide a seamless feedback with respect to the operation conversion of each input device.

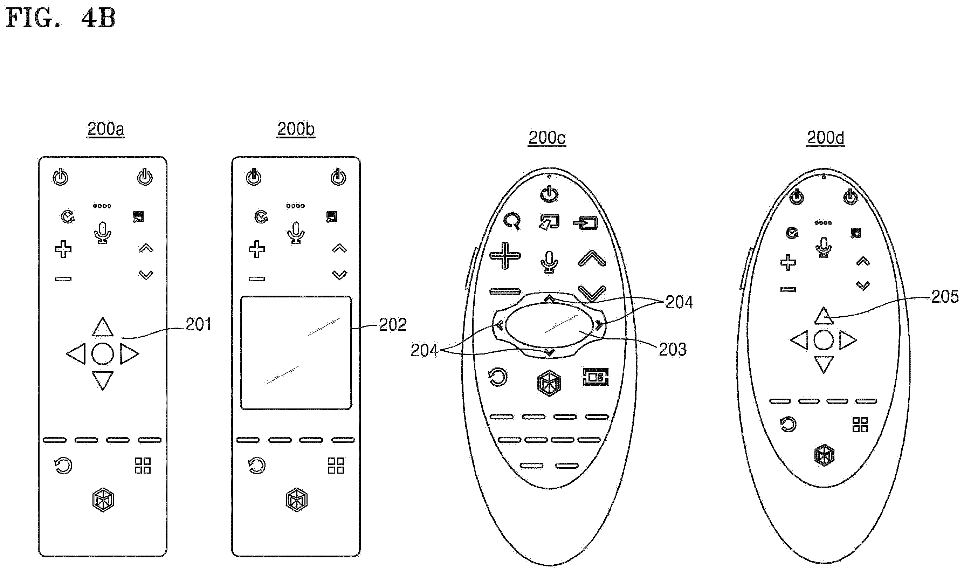

FIGS. 4A and 4B are block diagrams illustrating a configuration of a control device according to an exemplary embodiment.

Referring to FIG. 4A, a control device 200 may include a wireless communicator 220, a user input interface 230, a sensor 240, an output interface 250, a power supply 260, a storage 270, and a controller 280.

The wireless communicator 220 may transceive a signal with the display apparatus according to the exemplary embodiments described above. The wireless communicator 220 may include a RF module 221 capable of transceiving a signal with the display apparatus 100 according to an RF communication standard. Further, the control device 200 may include an infrared (IR) module 223 capable of transceiving a signal with the display apparatus 100 according to an IR communication standard.

In an exemplary embodiment, the control device 200 may transmit a signal including information related to a motion, etc. of the control device 200 to the display apparatus 100 through the RF module 221.

Further, the control device 200 may receive a signal transmitted by the display apparatus 100 through the RF module 221. Moreover, the control device 200 may transmit a command related to power on/off, channel change, volume control, etc. to the display apparatus 100 through the IR module 223.

The user input interface 230 may be configured as a keypad, a button, a touch pad, and/or a touch screen, etc. The user may input a command related to the display apparatus 100 to the control device 200 by manipulating the user input interface 230. When the user input interface 230 includes a hard key button, the user may input a command related to the display apparatus 100 to the control device 200 through an operation of pushing the hard key button. When the user input interface 230 includes the touch screen, the user may input a command related to the display apparatus 100 to the control device 200 by touching a soft key of the touch screen.

For example, the user input interface 230 may include a four-directional button or a four-directional key 201 such as the control device 200a shown in FIG. 1B and FIG. 4B. The four-directional button or four-directional key may be used for controlling a window, a region, an application, or an item displayed on the display 115. The four-directional key or button may be used to direct movements in upward, downward, leftward, and rightward directions. Further, it may be understood that the user input interface 230 may include a two-directional key or a two-directional button instead of the four-directional key or the four-directional button. That is, the key or button arrangement is not particularly limited in embodiments of the invention.

According to an exemplary embodiment, the four-directional button or the four-directional key 201 may be used for moving a focus of an item displayed in the item region provided in the display 115.

Further, the user input interface 230 may include various kinds of input units, such as a scroll key or a jog key, etc., which may be manipulated by the user.

Moreover, the user input interface 230 may include a touch pad 202 such as that of the control device 200b shown in FIG. 4B. According to an exemplary embodiment, the user input interface 230 may receive a user input of dragging, touching, or flipping through the touch pad of the control device 200. Further, the display apparatus 100 may be controlled according to a kind of the received user input (for example, a direction in which a drag command is input, and a period in which a touch command is input).

Returning to FIG. 4A, the sensor 240 may include a gyro sensor 241 or an acceleration sensor 243. The gyro sensor 241 may sense information on a motion of the control device 200. As an example, the gyro sensor 241 may sense the information on the motion of the control device 200 based on x, y, and z axes. The acceleration sensor 243 may sense information on a movement speed of the control device 200. The sensor 240 may further include a distance measurement sensor, and sense a distance from the display apparatus 100 using the distance measurement sensor.

Referring to FIG. 4B, the control device 200c according to an exemplary embodiment may be implemented as a pointing device including a four-directional key 204, a touch pad 203, a gyro sensor 241 (shown in FIG. 4A), and an acceleration sensor 242 (shown in FIG. 4A). That is, when the control device 200 is implemented as the pointing device, a function of the display apparatus 100 may be controlled according to a tilting direction or angle, etc. using the gyro sensor 241 of the control device 200.

According to an exemplary embodiment, a selection signal of the four-directional key 204 may be used for moving a focus of an item displayed in the item region provided in the display 115.

According to another exemplary embodiment, a touch signal of the touch pad 203 may be used for controlling a movement of a cursor provided in the display 115. That is, when the touch signal of the touch pad 203 is used for controlling the movement of the cursor, the user may use a signal of the acceleration sensor or the gyro sensor of the pointing device 200c as an input signal for controlling the movement of the cursor by touching the touch pad 203 of the pointing device 200c. Accordingly, the user may activate a pointing function of the pointing device 200c by touching the touch pad 203, and deactivate the pointing function of the pointing device 200c by releasing the touch on the touch pad 203 of the pointing device 200c.

Referring to FIG. 4B, the control device 200d according to an exemplary embodiment may be implemented as a pointing device including a four-directional key 205, a gyro sensor 241 (shown in FIG. 4A), and an acceleration sensor 242 (shown in FIG. 4A). The control device 200d may be similar to the control device 200c, but may omit the touch pad 203. Accordingly, the control device 200d may implement the pointing function without a touch to the touch pad. The user may activate the pointing function of the control device 200d by gripping and moving the control device 200d, and deactivate the pointing function of the control device 200d by not moving the control device 200d, or by putting down the control device 200d such that the control device 200d enters a power saving mode after a time has passed. The time may be predetermined.

Returning to FIG. 4A, the output interface 250 may output an image or voice signal corresponding to the manipulation of the user input interface 230 or a signal received in the display apparatus 100. The user may recognize whether the user input interface 230 is manipulated or the display apparatus 100 is controlled through the output interface 250.

As an example, the output interface 250 may include an LED module 251 turned on or off when the user input interface 230 is manipulated or a signal is transceived with the display apparatus 100 through the wireless communicator 220, a vibration module 253 generating a vibration, a sound output module 255 outputting a sound, or a display module 257 which outputs an image.

The power supply 260 may supply power to the control device 200. The power supply 260 may reduce power consumption by stopping the supply of power when the control device 200 is not moved for a period of time. The period of time may be predetermined, or may be set by the manufacturer or the user. The power supply 260 may resume supplying the power when a key included in the control device 200 is manipulated. The key may be predetermined or may be set by the manufacturer or the user.

The storage 270 may store various kinds of programs, application data, etc. needed for a control or an operation of the control device 200.

The controller 280 may control overall operations related to the control of the control device 200. The controller 280 may transmit a signal corresponding to the manipulation of a key included in the user input interface 230 or a signal corresponding to the motion of the control device 200 sensed in the sensor 240 to the display apparatus 100 through the wireless communicator 220.

The display apparatus 100 may include a coordinate value calculation unit (not shown) capable of calculating coordinate values of a cursor corresponding to the motion of the control device 200.

The coordinate value calculation unit (not shown) may calculate the coordinate values (x, y) of the cursor displayed on the display 115 by correcting a vibration of a hand or an error from a signal corresponding to the motion of the control device 200 which is sensed.

Further, the transmission signal of the control device 200 sensed by the sensor 160 may be transmitted to the controller 180 of the display apparatus 100. The controller 180 may determine information on the motion of the control device 200 and the manipulation of the key from the signal transmitted by the control device 200, and may control the display apparatus 100 in response to the determined result.

As another example, the control device 200 may calculate the coordinate values of a cursor corresponding to the motion, and transmit the calculated result to the display apparatus 100. In this case, the display apparatus 100 may transmit information on the received pointer coordinate values to the controller 180 without separately correcting the vibration of the hand or the error.

According to an exemplary embodiment, the user may control a position of the cursor or the focus displayed on the screen of the display using the direction key, the touch pad, the pointing function, etc. of the control device 200, and select the item.

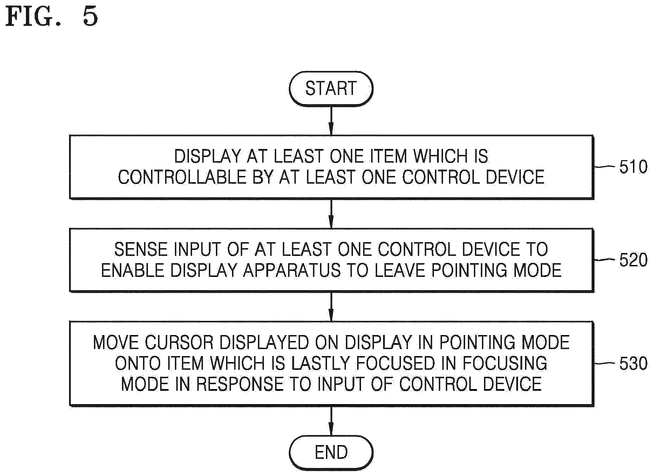

FIG. 5 is a flowchart for describing a display method in a display apparatus according to an exemplary embodiment.

Referring to FIG. 5, in operation S510, the display apparatus 100 displays on the display 115 at least one item controllable by at least one control device.

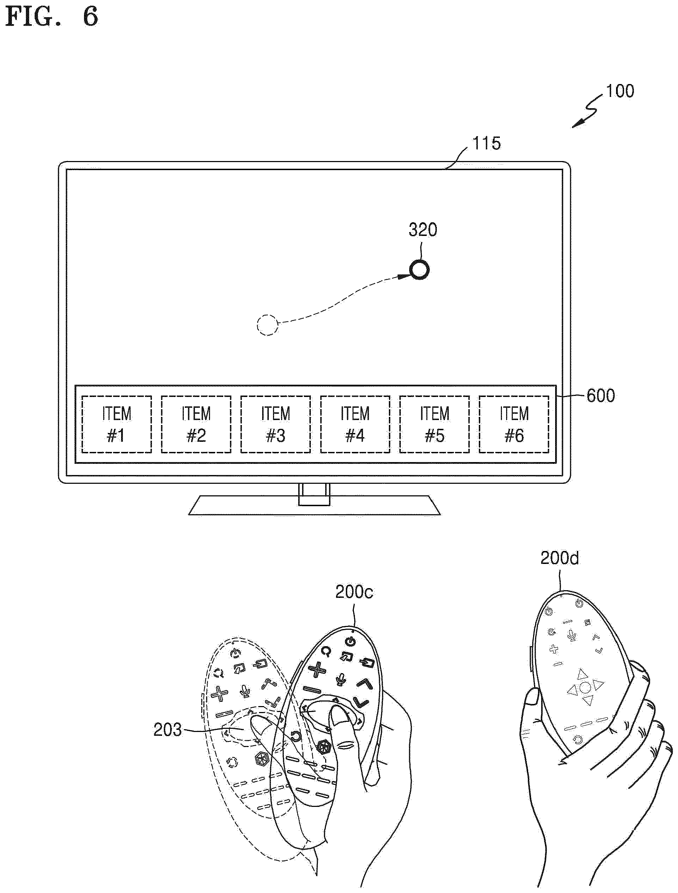

According to an exemplary embodiment, the display 115 may display the item as shown in FIG. 6. Referring to FIG. 6, the display apparatus 100 may provide an item region 600 for displaying items on the display 115, and display items #1 to #6 in the item region 600. Positions or the number of the item regions, and arrangements or the number of items may be diversely set, and be set according to methods described with reference to FIGS. 1A to 1C.

The items displayed on the display 115 may be controlled according to a signal corresponding to the input of the direction key of the control device in the focusing mode, or be controlled according to a signal corresponding to the pointing function of the control device in the pointing mode as shown in FIG. 6.

FIG. 6 is a reference diagram for describing a display screen when a display apparatus is operated in a pointing mode according to an exemplary embodiment.

Referring to FIG. 6, the user may activate the pointing function of the control device 200c by touching the touch pad 203 of the control device 200c including the touch pad 203. When the user moves the control device 200c in a state of touching the touch pad 203 of the control device 200c, the gyro sensor 241 and the acceleration sensor 243 of the control device 200c sense the motion of the control device 200c and the control device 200c transmits the sensed movement signal to the display apparatus 100, and the sensor 160 of the display apparatus 100 receives the movement signal and transmits the movement signal to the controller 180.

The controller 180 which implements a display control function by loading the display control module 190-1 stored in the storage 190 places the cursor 320 in a position corresponding to the movement signal based on the movement signal transmitted from the sensor 160 by the pointing system 20.

Alternatively, the user may activate the pointing function of the control device 200d by gripping and moving the control device 200d in which the touch pad is not included.

Returning to FIG. 5, in operation S520, the display apparatus 100 senses at least one input of the control device to enable the display apparatus to leave the pointing mode.

The input of the control device to enable the display apparatus to leave the pointing mode may include a deactivation action of the control device used in the pointing mode or an activation action of the control device used in the focusing mode.

The deactivation action of the control device used in the pointing mode may include a release of the touch in the control device used in the pointing mode or an entry of the power saving mode of the control device used in the pointing mode.

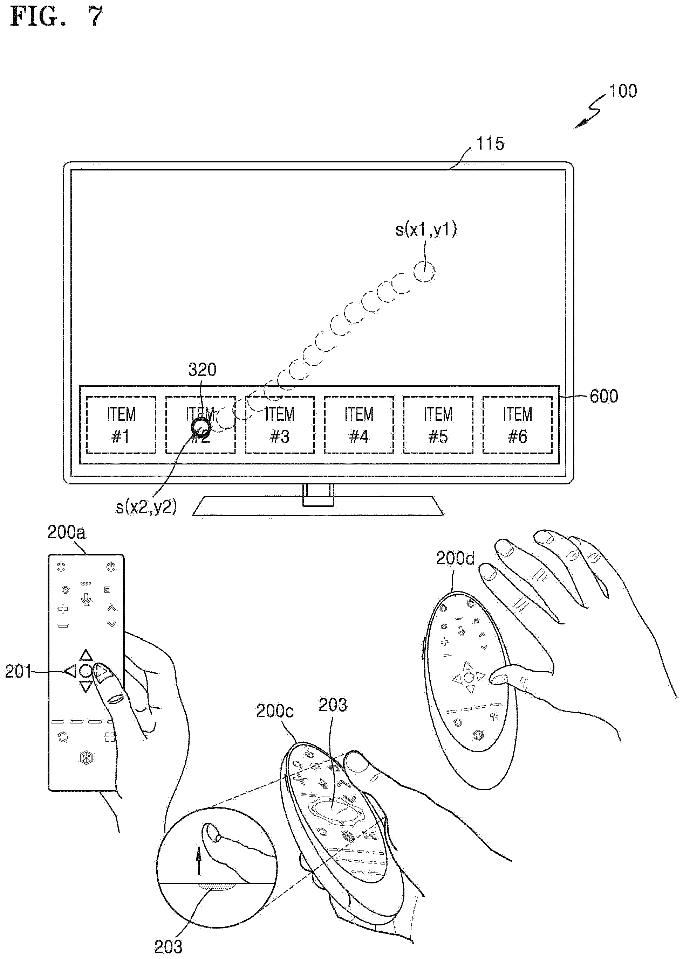

FIG. 7 is a reference diagram for describing an operation of a display apparatus according to input of a control device so that a display apparatus departs a pointing mode according to an exemplary embodiment.

Referring to FIG. 7, in a state in which a cursor 320 is placed at a position s(xi, y1) in the pointing mode, the user may deactivate the control device used in the pointing mode by moving fingers away from the touch pad 203 and releasing the touch, in the control device 200c in which the pointing function is implemented by including the touch pad 203.

Alternatively, the control device 200d may enter the power saving mode when a period of time elapses without sensing the movement signal in the control device 200d
when the user puts down the control device 200d in which the pointing function is implemented without including the touch pad. The period of time may be predetermined, or may be set by the manufacturer or the user. The entry of the power saving mode may be used as the deactivation action of the control device used in the pointing mode.

The activation action of the control device used in the focusing mode may include a signal corresponding to the input of the direction key by the user in the control device 200a including the direction key 201 as shown in FIG. 7.

The sensor 160 of the display apparatus 100 may sense the input of at least one control device to enable the display apparatus to leave the pointing mode, and transmit the sensed input to the controller 180.

The pointing system 20 of the controller 180 may inform the integrated input device control system 40 of an event which indicates that there is a signal corresponding to the input of at least one control device to enable the display apparatus to leave the pointing mode as a type of an event.

Returning again to FIG. 5, in operation S530, the display apparatus 100 may move the cursor displayed on the display in the pointing mode onto the item which is focused on last in the focusing mode, in response to the sensed input.

The integrated input device control system 40 of the controller 180 which receives an event which indicates that there is a signal corresponding to the input of at least one control device to enable the display apparatus to leave the pointing mode may directly cause the cursor to disappear in the display 115, and confirm information on the item which is lastly focused from the last focusing item information 12 stored in the focusing system 10.

The integrated input device control system 40 may confirm position coordinates of the item which is focused on last through the UI toolkit system 30.

After this, the integrated input device control system 40 may execute an animation of moving from a current position of the cursor, that is, a position of the cursor when a signal corresponding to the input of the control device to enable the display apparatus to leave the pointing mode to a position of the item which is focused on last.

For example, referring to FIG. 7, it is assumed that the position of the cursor when a signal corresponding to the input of the control device to enable the display apparatus to leave the pointing mode is sensed is s(x1, y1), the item which is focused on last is the item #2, and a center position of the item #2 is s(x2, y2). The integrated input device control system 40 does not directly cause the cursor to disappear from the position s(x1, y1) but execute the animation of moving the cursor from the position s(x1, y1) to the position s(x2, y2) when a signal corresponding to the input of the control device to enable the display apparatus to leave the pointing mode is sensed. The user does not experience that the cursor has abruptly disappeared, and may experience a natural movement of the cursor when entering the focusing mode from the pointing mode by executing the animation.

The position at which the cursor is moved need not be the center position of the item which is focused on last, and may be any position on the item which is focused on last.

According to an exemplary embodiment, the display apparatus 100 may cause the cursor to disappear from the display 115 after the operation of moving the cursor onto the item which is focused on last is completed.

Further, according to another exemplary embodiment, the display apparatus 100 may move the cursor onto the item which is focused on last, and also display by adding a visual effect to the item which is focused on last.

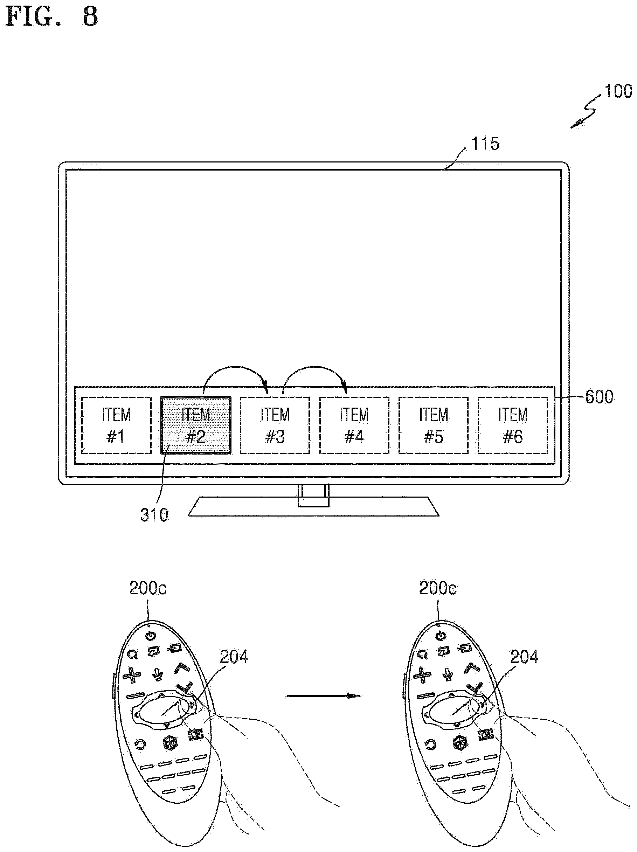

FIG. 8 is a reference diagram for describing a display screen when a display apparatus is operated in a focusing mode according to an exemplary embodiment.

Referring to FIG. 8, the UI toolkit system 30 of the controller 180 may cause the cursor to disappear, and add a visual effect 310 to the item #2 for indicating that the item #2 is focused on when the operation of moving the cursor onto the item #2 which is focused on last is completed as shown in FIG. 7. The visual effect 310 which indicates that the item is focused on may be diversely determined, and for example, the visual effect 310 of surrounding a border of the item #2 with a bold line (see, e.g., FIG. 1B) or differentiating a color of the item #2 from colors of other items may be applied.

The user may move a focus between the items by starting from the item #2 which is focused using the control device 200c having the focusing function.

When the display apparatus is operated in the focusing mode in a state in which the item #2 is focused on, for example, the user may move the focus to the item #3 adjacent to the right of the item #2 by pushing a right direction key among the direction key 204 of the control device 200c shown in FIG. 8.

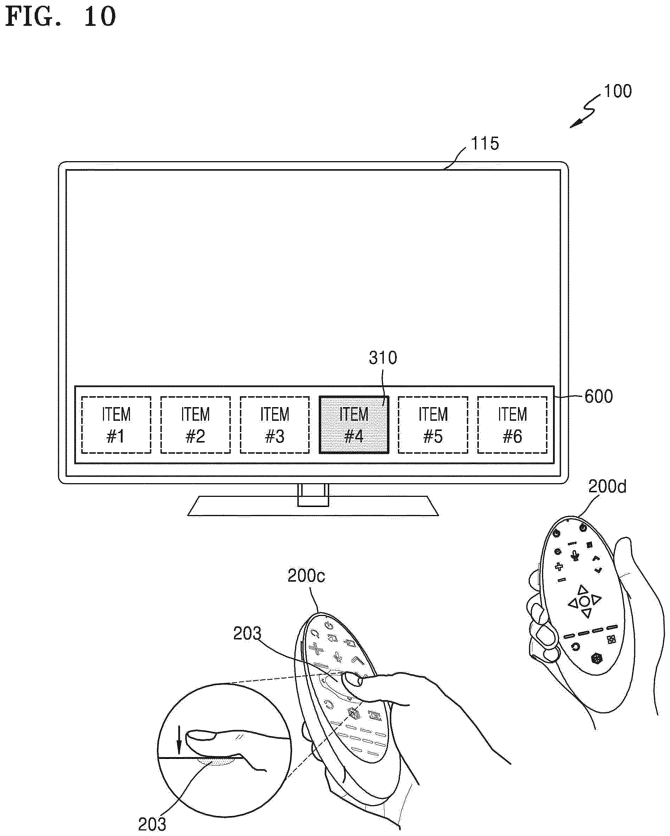

Further, the user may move the focus to the item #4 adjacent to the right of the item #3 by pushing the right direction key once more as shown in FIG. 8. An example in which the item #4 is focused on is illustrated in FIG. 10.

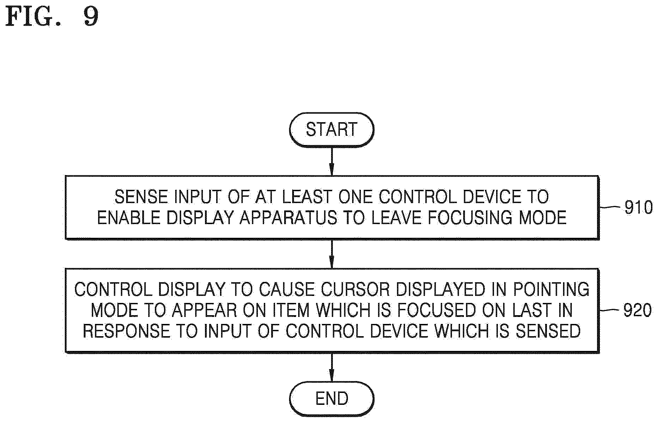

FIG. 9 is a flowchart for describing a display method in a display apparatus according to an exemplary embodiment.

Referring to FIG. 9, in operation S910, the display apparatus 100 senses the input of the control device to enable the display apparatus to leave the focusing mode.

The input of the control device to enable the display apparatus to leave the focusing mode may include the activation action of the control device used in the pointing mode.

FIG. 10 is a reference diagram for describing input of a control device so that a display apparatus departs a focusing mode according to an exemplary embodiment.

Referring to FIG. 10, the activation action of the control device used in the pointing mode may include an operation in which the user uses a finger to touch the touch pad 203 of the control device 200c in which the pointing function is implemented by including the touch pad.

Alternatively, the activation action of the control device used in the pointing mode may include an operation of gripping and moving the control device 200d in which the pointing function is implemented without including the touch pad. It should be noted that, in some exemplary embodiments, the activation action including the operation of gripping and moving the control device may also be implemented in the control device 200c which includes the touch pad.

When a signal corresponding to the input of the control device to enable the display apparatus to leave the focusing mode is sensed, the pointing system 20 of the controller 180 may inform the integrated input device control system 40 of the sensed input in a type of an event.

Returning to FIG. 9, in operation S920, the display apparatus 100 may control the display to cause the cursor displayed in the pointing mode to appear on the item which is focused on last in response to a signal corresponding to the input of the control device to enable the display apparatus to leave the focusing mode.

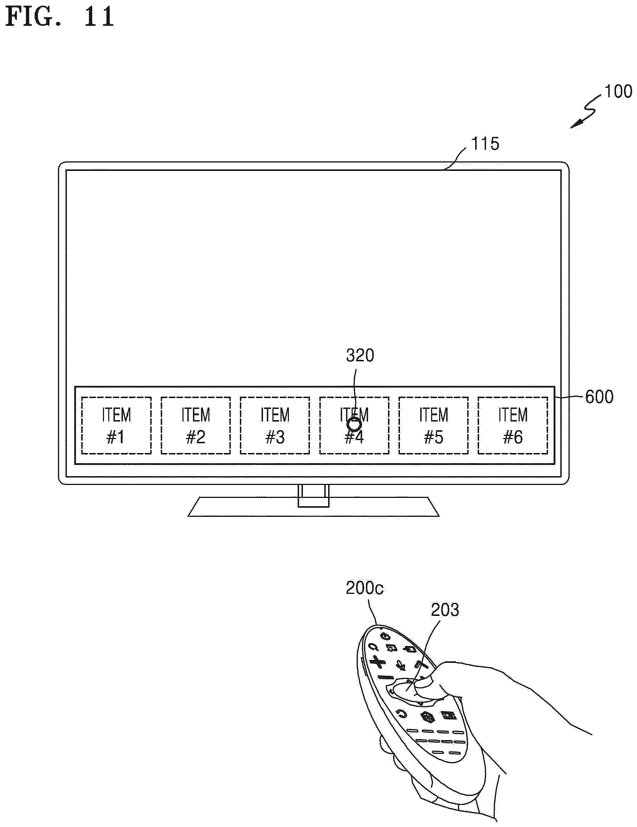

FIG. 11 is a reference diagram for describing a display screen when a display apparatus is operated in a pointing mode according to another exemplary embodiment.

Referring to FIG. 11, the integrated input device control system 40 which receives an event which indicates that the input of the control device to enable the display apparatus to leave the focusing mode is sensed may cause the cursor 320 displayed in the pointing mode to appear on the item #4 which is focused on last.

The user may control the movement of the cursor from the position of the cursor located on the item #4 using the control device 200c having the pointing function.

When entering the pointing mode from the focusing mode, the user may experience a natural and seamless feedback among various input devices by starting to draw the cursor starting to be displayed in the focusing mode on not an arbitrary position on the display 115 but a position in which the focusing operation is complete, that is, the item which is focused on last.

The display method according to the above described exemplary embodiments may be recorded in a computer readable recording medium by being implemented in a program instruction form capable of being executed through various computer devices. The computer readable recording medium may include a program instruction, a data file, a data structure, etc. alone or in combination. The program instruction may be specially designed and be configured for the exemplary embodiment, or may be the program instruction which is known to those of ordinary skill in computer software and is used. Examples of the computer readable recording medium may include a hard disk, a magnetic media such as a floppy disk and a magnetic tape, an optical media such as a compact disk (CD)-ROM, a digital versatile disk (DVD), a magneto-optical media such as a floptical disk, and a hardware device which is specially configured to store and execute a program such as a ROM, a RAM, a flash memory, etc. Examples of the program instruction may include not only a machine code made by a compiler but also a high-level language code which is executable by a computer using an interpreter, etc.

According to exemplary embodiments disclosed herein, the display apparatus may inform the user of a position in which a feedback is started when manipulating using each input device by providing a seamless UI feedback among the plurality of control devices controlling the display apparatus.

In the specification described above, the disclosure and advantages of the present inventive concept are described with reference to specific exemplary embodiments. However, it will be understood by those of ordinary skill in the art that various changes and modifications in form and details may be made therein without departing from the scope as defined by the following claims.

## Claims

1. A display apparatus (100) comprising:
a display (115);
a control signal receiver (160) configured to receive a control signal from one or two remote control devices (200, 200a, 200c, 200d); and
a controller (180) configured to:
control the display to display a plurality of items;
control the display apparatus to operate in a pointing mode, in which the controller is adapted to control the display to display a cursor (320) at a location determined based on a control signal for controlling the position of the cursor, received from one of said one or two remote control devices; and
control the display apparatus to operate in a focusing mode, in which the controller is adapted to control the display to display an indicator on an item among the plurality of items so as to highlight the item for selection based on a control signal received from one of said one or two remote control devices,
**characterized in that** the controller is further configured to: while the display apparatus operates in the pointing mode, in response to an input from one of said one or two remote control devices, to enable the display apparatus to leave the pointing mode and move the cursor displayed on the display in the pointing mode onto a last item on which the indicator was located in the last focusing mode, and display the indicator on the last item.

2. The display apparatus of claim 1, wherein the input includes at least one of:
an input to deactivate the pointing mode from a first remote control device of said one or two remote control devices (200c, 200d, 200) which is adapted to operate in the pointing mode of the display apparatus, and
an input to activate the focusing mode from a second remote control device of said one or two remote control devices (200a, 200) which is adapted to operate in the focusing mode of the display apparatus.

3. The display apparatus of claim 2, wherein the input to deactivate the pointing mode from the first remote control device includes an indication of a release of a touch on the first remote control device or an indication of an entry in a power saving mode of the first remote control device.

4. The display apparatus of claim 2 or 3, wherein the input to activate the focusing mode from the second remote control device includes an indication of an input of a direction key (201) of the second remote control device.

5. The display apparatus of any one of claims 2 to 4, wherein the first remote control device and the second remote control device are implemented as a single device (200).

6. The display apparatus of any one of claims 1 to 5, wherein the controller is arranged to cause the cursor to disappear from the display after an operation of moving the cursor onto the item on which the indicator was located last in the last focusing mode is completed.

7. The display apparatus of any one of claims 1 to 5, wherein the controller is arranged to move the cursor onto the item on which the indicator was located last in the last focusing mode and add a visual effect (310) to the item on which the indicator was located last in the last focusing mode.

8. The display apparatus of any one of claims 1 to 5, wherein the controller is arranged to control the display to continuously display a movement of the cursor when moving the cursor onto the item on which the indicator was located last in the last focusing mode.

9. The display apparatus of any one of claims 1 to 8, wherein the controller is arranged to control the display to cause the cursor displayed in the pointing mode to appear on the item on which the indicator was located last in the last focusing mode, in response to receiving an indication of an input from the at least one remote control device to enable the display apparatus to leave the focusing mode.

10. The display apparatus of claim 9, wherein the received indication of the input from the remote control device to enable the display apparatus to leave the focusing mode includes an input from a pointing device.

11. A display method for a display apparatus operating with one or two remote control devices, the display apparatus comprising a controller (180), the display method comprising:
displaying a plurality of items on a display;
control the display apparatus to operate in a pointing mode, in which the controller is adapted to control the display to display a cursor (320) at a location determined based on a control signal for controlling the position of the cursor, received from one of said one or two remote control devices; and
control the display apparatus to operate in a focusing mode, in which the controller is adapted to control the display to display an indicator on an item among the plurality of items so as to highlight the item for selection based on a control signal received from one of said one or two remote control devices,
**characterized in**: while the display apparatus operates in the pointing mode, in response to an input from one of said one or two remote control devices, enable the display apparatus to leave the pointing mode and move the cursor displayed on the display in the pointing mode onto a last item on which the indicator was located last in a last focusing mode, and display the indicator on the last item.

12. The display method of claim 11, wherein
the input includes at least one of:
an input to deactivate the pointing mode from a first remote control device of said one or two remote control devices which is adapted to operate in the pointing mode of the display apparatus, and
an input to activate the focusing mode from a second remote control device one of said one or two remote control devices which is adapted to operate in the focusing mode of the display apparatus.

13. The display method of claim 12, wherein the input to deactivate the pointing mode from the first remote control device includes an indication of a release of a touch on the first remote control device or an indication of an entry in a power saving mode of the first remote control device.

14. The display method of claim 12 or 13, wherein the input to activate the focusing mode from the second remote control device includes an indication of an input of a direction key of the second remote control device.

15. The display method of any one of claims 12 to 14, wherein the first remote control device and the second remote control device are implemented as a single device (200).

## Patentansprüche

1. Anzeigevorrichtung (100), die Folgendes umfasst:
ein Display (115);
einen Steuersignalempfänger (160), der dazu konfiguriert ist, ein Steuersignal von einem oder zwei Fernsteuerungsgeräten (200, 200a, 200c, 200d) zu empfangen; und
eine Steuereinheit (180), die dazu konfiguriert ist:
das Display dazu zu steuern, eine Vielzahl von Elementen anzuzeigen;
die Anzeigevorrichtung dazu zu steuern, in einem Zeigemodus zu arbeiten, in dem die Steuereinheit dazu angepasst ist, das Display dazu zu steuern, einen Cursor (320) an einem Ort anzuzeigen, der basierend auf einem Stuersignal zum Steuern der Position des Cursors bestimmt wird, das von einem des einen oder der zwei Fernsteuerungsgeräte her empfangen wird ; und
die Anzeigevorrichtung dazu zu steuern, in einem Fokussiermodus zu arbeiten, in dem die Steuereinheit dazu angepasst ist, das Display dazu zu steuern, basierend auf einem von einem des einen oder der zwei Fernsteuerungsgeräte her empfangenen Steuersignal eine Markierung auf einem Element unter der Vielzahl von Elementen anzuzeigen, um das Element zur Auswahl hervorzuheben,
**dadurch gekennzeichnet, dass** die Steuereinheit weiter dazu konfiguriert ist:
während die Anzeigevorrichtung in dem Zeigemodus arbeitet, als Reaktion auf eine Eingabe von einem des einen oder der zwei Fernsteuerungsgeräte, es der Anzeigevorrichtung zu ermöglichen, den Zeigemodus zu verlassen, und den in dem Zeigemodus auf dem Display angezeigten Cursor auf ein letztes Element, auf dem sich die Markierung in dem letzten Fokussierungsmodus befand, zu bewegen, und die Markierung auf dem letzten Element anzuzeigen.

2. Anzeigevorrichtung nach Anspruch 1, wobei die Eingabe mindestens eine der Folgenden umfasst:
eine Eingabe zum Deaktivieren des Zeigemodus von einem ersten Fernsteuerungsgerät des einen oder der zwei Fernsteuerungsgeräte (200c, 200d, 200) her, das dazu angepasst ist, in dem Zeigemodus der Anzeigevorrichtung zu arbeiten, und
eine Eingabe zu Aktivieren des Fokussierungsmodus von einem zweiten Fernsteuerungsgerät des einen oder der zwei Fernsteuerungsgeräte (200a, 200) her, das dazu angepasst ist, in dem Fokussierungsmodus der Anzeigevorrichtung zu arbeiten.

3. Anzeigevorrichtung nach Anspruch 2, wobei die Eingabe zum Deaktivieren des Zeigemodus ausgehend von dem ersten Fernsteuerungsgerät eine Angabe eines Lösens einer Berührung an dem ersten Fernsteuerungsgerät oder eine Angabe eines Eintretens in einen Stromsparmodus des ersten Fernsteuerungsgeräts umfasst.

4. Anzeigevorrichtung nach Anspruch 2 oder 3, wobei die Eingabe zum Aktivieren des Fokussierungsmodus von dem zweiten Fernsteuerungsgerät her eine Angabe einer Eingabe einer Richtungstaste (201) des zweiten Fernsteuerungsgeräts umfasst.

5. Anzeigevorrichtung nach einem der Ansprüche 2 bis 4, wobei das erste Fernsteuerungsgerät und das zweite Fernsteuerungsgerät als ein einziges Gerät (200) implementiert sind.

6. Anzeigevorrichtung nach einem der Ansprüche 1 bis 5, wobei die Steuereinheit dazu angeordnet ist, zu bewirken, dass der Cursor von dem Display verschwindet, nachdem ein Vorgang des Bewegens des Cursors auf das Element, auf dem sich die Markierung in dem letzten Fokussierungsmodus zuletzt befand, abgeschlossen ist.

7. Anzeigevorrichtung nach einem der Ansprüche 1 bis 5, wobei die Steuereinheit dazu angeordnet ist, den Cursor auf das Element zu bewegen, auf dem sich die Markierung in dem letzten Fokussierungsmodus zuletzt befand, und einen optischen Effekt (310) zu dem Element, auf dem sich die Markierung in dem letzten Fokussierungsmodus zuletzt befand, hinzuzufügen.

8. Anzeigevorrichtung nach einem der Ansprüche 1 bis 5, wobei die Steuereinheit dazu angeordnet ist, das Display dazu zu steuern, eine Bewegung des Cursors kontinuierlich anzuzeigen, wenn der Cursor auf das Element bewegt wird, auf dem sich die Markierung in dem letzten Fokussierungsmodus zuletzt befand.

9. Anzeigevorrichtung nach einem der Ansprüche 1 bis 8, wobei die Steuereinheit dazu angeordnet ist, als Reaktion auf das Empfangen einer Angabe einer Eingabe von dem mindestens einen Fernsteuerungsgerät, um es der Anzeigevorrichtung zu ermöglichen, den Fokussierungsmodus zu verlassen, das Display dazu zu steuern, zu bewirken, dass der in dem Zeigemodus angezeigte Cursor auf dem Element erscheint, auf dem sich die Markierung in dem letzten Fokussierungsmodus zuletzt befand.

10. Anzeigevorrichtung nach Anspruch 9, wobei die empfangene Angabe der Eingabe von dem Fernsteuerungsgerät, um es der Anzeigevorrichtung zu ermöglichen, den Fokussierungsmodus zu verlassen, eine Eingabe von einem Zeigegerät umfasst.

11. Anzeigeverfahren für eine mit einem oder zwei Fernsteuerungsgeräten arbeitende Anzeigevorrichtung, wobei die Anzeigevorrichtung eine Steuereinheit (180) umfasst, wobei das Anzeigeverfahren Folgendes umfasst:
Anzeigen einer Vielzahl von Elementen auf einem Display;
Steuern der Anzeigevorrichtung, um in einem Zeigemodus zu arbeiten, in dem die Steuereinheit dazu angepasst ist, das Display dazu zu steuern, einen Cursor (320) an einem Ort anzuzeigen, der basierend auf einem Steuersignal zum Steuern der Position des Cursors bestimmt wird, das von einem des einen oder der zwei Fernsteuerungsgeräte her empfangen wird; und
Steuern der Anzeigevorrichtung, um in einem Fokussiermodus zu arbeiten, in dem die Steuereinheit dazu angepasst ist, das Display dazu zu steuern, basierend auf einem von einem des einen oder der zwei Fernsteuerungsgeräte her empfangenen Steuersignal eine Markierung auf einem Element unter der Vielzahl von Elementen anzuzeigen, um das Element zur Auswahl hervorzuheben,
**gekennzeichnet durch**:
während die Anzeigevorrichtung in dem Zeigemodus arbeitet, als Reaktion auf eine Eingabe von einem des einen oder der zwei Fernsteuerungsgeräte, Ermöglichen, dass die Anzeigevorrichtung den Zeigemodus verlässt, und Bewegen des in dem Zeigemodus auf dem Display angezeigten Cursors auf ein letztes Element, auf dem sich die Markierung in einem letzten Fokussierungsmodus zuletzt befand, und Anzeigen der Markierung auf dem letzten Element.

12. Anzeigeverfahren nach Anspruch 11, wobei die Eingabe mindestens eine der Folgenden umfasst:
eine Eingabe zu Deaktivieren des Zeigemodus von einem ersten Fernsteuerungsgerät des einen oder der zwei Fernsteuerungsgeräte her, das dazu angepasst ist, in dem Zeigemodus der Anzeigevorrichtung zu arbeiten, und
eine Eingabe zu Aktivieren des Fokussierungsmodus von einem zweiten Fernsteuerungsgerät des einen oder der zwei Fernsteuerungsgeräte her, das dazu angepasst ist, in dem Fokussierungsmodus der Anzeigevorrichtung zu arbeiten.

13. Anzeigeverfahren nach Anspruch 12, wobei die Eingabe zum Deaktivieren des Zeigemodus von dem ersten Fernsteuerungsgerät her eine Angabe eines Lösens einer Berührung an dem ersten Fernsteuerungsgerät oder eine Angabe eines Eintretens in einen Stromsparmodus des ersten Fernsteuerungsgeräts umfasst.

14. Anzeigeverfahren nach Anspruch 12 oder 13, wobei die Eingabe zum Aktivieren des Fokussierungsmodus von dem zweiten Fernsteuerungsgerät her eine Angabe einer Eingabe einer Richtungstaste des zweiten Fernsteuerungsgeräts umfasst.

15. Anzeigeverfahren nach einem der Ansprüche 12 bis 14, wobei das erste Fernsteuerungsgerät und das zweite Fernsteuerungsgerät als ein einziges Gerät (200) implementiert sind.

## Revendications

1. Appareil d'affichage (100), comprenant :
un écran (115) ;
un récepteur de signal de commande (160), configuré pour recevoir un signal de contrôle en provenance d'un ou deux dispositifs de télécommande (200, 200a, 200c, 200d) ; et
un contrôleur (180) configuré pour :
commander l'écran pour qu'il affiche une pluralité d'éléments ;
commander l'appareil d'affichage pour qu'il fonctionne dans un mode de pointage, dans lequel le contrôleur est conçu pour commander l'écran pour qu'il affiche un curseur (320) à un emplacement déterminé sur la base d'un signal de commande destiné à commander la position du curseur, reçu en provenance dudit ou desdits deux dispositifs de télécommande ; et
commander l'appareil d'affichage pour qu'il fonctionne dans un mode de ciblage, dans lequel le contrôleur est conçu pour commander l'écran pour qu'il affiche un indicateur sur un élément parmi la pluralité d'éléments de manière à mettre l'élément en surbrillance en vue de sa sélection sur la base d'un signal de commande reçu en provenance dudit ou desdits deux dispositifs de télécommande,
l'appareil d'affichage étant **caractérisé en ce que** le contrôleur est en outre configuré pour :
pendant que l'appareil d'affichage fonctionne dans le mode de pointage, en réponse à une entrée en provenance dudit ou desdits deux dispositifs de télécommande, permettre à l'appareil de quitter le mode de pointage et de déplacer le curseur affiché sur l'écran dans le mode de pointage sur un dernier élément sur lequel l'indicateur était situé dans le dernier mode de ciblage, et afficher l'indicateur sur le dernier élément.

2. Appareil d'affichage selon la revendication 1, dans lequel l'entrée inclut au moins une entrée parmi :
une entrée pour désactiver le mode de pointage à partir d'un premier dispositif de télécommande dudit ou desdits deux dispositifs de télécommande (200c, 200d, 200), conçu pour fonctionner dans le mode de pointage de l'appareil d'affichage ; et
une entrée pour activer le mode de ciblage à partir d'un second dispositif de télécommande dudit ou desdits deux dispositifs de télécommande (200a, 200), conçu pour fonctionner dans le mode de ciblage de l'appareil d'affichage.

3. Appareil d'affichage selon la revendication 2, dans lequel l'entrée pour désactiver le mode de pointage à partir du premier dispositif de télécommande comprend une indication d'un arrêt d'un toucher sur le premier dispositif de télécommande ou une indication d'une entrée dans un mode d'économie d'énergie du premier dispositif de télécommande.

4. Appareil d'affichage selon la revendication 2 ou 3, dans lequel l'entrée pour activer le mode de ciblage à partir du second dispositif de télécommande comprend une indication d'une entrée d'une touche de direction (201) du second dispositif de télécommande.

5. Appareil d'affichage selon l'une quelconque des revendications 2 à 4, dans lequel le premier dispositif de télécommande et le second dispositif de télécommande sont mis en oeuvre sous la forme d'un unique dispositif (200).

6. Appareil d'affichage selon l'une quelconque des revendications 1 à 5, dans lequel le contrôleur est conçu pour amener le curseur à disparaître de l'écran après la fin d'une opération de déplacement du curseur sur l'élément sur lequel l'indicateur était situé en dernier dans le dernier mode de ciblage.

7. Appareil d'affichage selon l'une quelconque des revendications 1 à 5, dans lequel le contrôleur est conçu pour déplacer le curseur sur l'élément sur lequel l'indicateur était situé en dernier dans le dernier mode de ciblage, et ajouter un effet visuel (310) sur l'élément sur lequel l'indicateur était situé en dernier dans le dernier mode de ciblage.

8. Appareil d'affichage selon l'une quelconque des revendications 1 à 5, dans lequel le contrôleur est conçu pour commander l'écran pour qu'il affiche en continu un déplacement du curseur lorsqu'il déplace le curseur sur l'élément sur lequel l'indicateur était situé en dernier dans le dernier mode de ciblage.

9. Appareil d'affichage selon l'une quelconque des revendications 1 à 8, dans lequel le contrôleur est conçu pour commander l'écran pour qu'il amène le curseur affiché dans le mode de pointage à apparaître sur l'élément sur lequel l'indicateur étant situé en dernier dans le dernier mode de ciblage, en réponse à la réception d'une indication d'une entrée en provenance de l'au moins un dispositif de télécommande pour permettre à l'appareil d'affichage de quitter le mode de ciblage.

10. Appareil d'affichage selon la revendication 9, dans lequel l'indication reçue de l'entrée en provenance du dispositif de télécommande pour permettre à l'appareil d'affichage de quitter le mode de ciblage comprend une entrée en provenance d'un dispositif de pointage.

11. Procédé d'affichage pour un appareil d'affichage fonctionnant avec un ou deux dispositifs de télécommande, l'appareil d'affichage comprenant un contrôleur (180), le procédé d'affichage consistant à :
afficher une pluralité d'éléments sur un écran ;
commander l'appareil d'affichage pour qu'il fonctionne dans un mode de pointage, dans lequel le contrôleur est conçu pour commander l'écran pour qu'il affiche un curseur (320) à un emplacement déterminé sur la base d'un signal de commande destiné à commander la position du curseur, reçu en provenance dudit ou desdits deux dispositifs de télécommande ; et
commander l'appareil d'affichage pour qu'il fonctionne dans un mode de ciblage, dans lequel le contrôleur est conçu pour commander l'écran pour qu'il affiche un indicateur sur un élément parmi la pluralité d'éléments de manière à mettre l'élément en surbrillance en vue de sa sélection sur la base d'un signal de commande reçu en provenance dudit ou desdits deux dispositifs de télécommande,
le procédé étant **caractérisé par** l'étape consistant à :
pendant que l'appareil d'affichage fonctionne dans le mode de pointage, en réponse à une entrée en provenance dudit ou desdits deux dispositifs de télécommande, permettre à l'appareil de quitter le mode de pointage et de déplacer le curseur affiché sur l'écran dans le mode de pointage sur un dernier élément sur lequel l'indicateur était situé en dernier dans un dernier mode de ciblage, et afficher l'indicateur sur le dernier élément.

12. Procédé d'affichage selon la revendication 11, dans lequel l'entrée inclut au moins une entrée parmi :
une entrée pour désactiver le mode de pointage à partir d'un premier dispositif de télécommande dudit ou desdits deux dispositifs de télécommande, conçu pour fonctionner dans le mode de pointage de l'appareil d'affichage ; et
une entrée pour activer le mode de ciblage à partir d'un second dispositif de télécommande dudit ou desdits deux dispositifs de télécommande, conçu pour fonctionner dans le mode de ciblage de l'appareil d'affichage.

13. Procédé d'affichage selon la revendication 12, dans lequel l'entrée pour désactiver le mode de pointage à partir du premier dispositif de télécommande comprend une indication d'un arrêt d'un toucher sur le premier dispositif de télécommande ou une indication d'une entrée dans un mode d'économie d'énergie du premier dispositif de télécommande.

14. Procédé d'affichage selon la revendication 12 ou 13, dans lequel l'entrée pour activer le mode de ciblage à partir du second dispositif de télécommande comprend une indication d'une entrée d'une touche de direction du second dispositif de télécommande.

15. Procédé d'affichage selon l'une quelconque des revendications 12 à 14, dans lequel le premier dispositif de télécommande et le second dispositif de télécommande sont mis en oeuvre sous la forme d'un unique dispositif (200).
